(19) Europäisches Patentamt

European Patent Office

Office européen des brevets

(11) **EP 1 184 259 B1**

(12) **FASCICULE DE BREVET EUROPEEN**

(45) Date de publication et mention
de la délivrance du brevet:
**02.11.2005 Bulletin 2005/44**

(21) Numéro de dépôt: **01402255.2**

(22) Date de dépôt: **29.08.2001**

(51) Int Cl.7: **B62D 6/00**
// B62D101:00, B62D117:00,
B62D119:00, B62D121:00,
B62D137:00, B62D153:00

(54) **Ensemble de direction assistée électrique pour véhicule automobile**

Elektrische Servolenkeinrichtung für ein Kraftfahrzeug

Electric power steering assembly for motor vehicle

(84) Etats contractants désignés:
**AT BE CH CY DE DK ES FI FR GB GR IE IT LI LU
MC NL PT SE TR**

(30) Priorité: **31.08.2000 FR 0011150
31.08.2000 FR 0011152**

(43) Date de publication de la demande:
**06.03.2002 Bulletin 2002/10**

(73) Titulaire: **Peugeot Citroen Automobiles SA
92200 Neuilly sur Seine (FR)**

(72) Inventeurs:
• **Bernede, Dominique Marc
78130 Les Mureaux (FR)**
• **Del Fabbro, Tonino
78230 Le Pecq (FR)**
• **Ebalard, Marc
75014 Paris (FR)**

(74) Mandataire: **Jacobson, Claude et al
Cabinet Lavoix
2, Place d'Estienne d'Orves
75441 Paris Cedex 09 (FR)**

(56) Documents cités:
**EP-A- 0 150 589        EP-A- 0 416 266
EP-A- 0 854 075        DE-A- 19 840 228
GB-A- 2 273 272        GB-A- 2 359 794
US-A- 5 528 497**

• **PATENT ABSTRACTS OF JAPAN vol. 1997, no.
01, 31 janvier 1997 (1997-01-31) -& JP 08 244635
A (HONDA MOTOR CO LTD), 24 septembre 1996
(1996-09-24)**
• **PATENT ABSTRACTS OF JAPAN vol. 1997, no.
07, 31 juillet 1997 (1997-07-31) -& JP 09 076927 A
(KAYABA IND CO LTD), 25 mars 1997
(1997-03-25)**

EP 1 184 259 B1

## Description

L'invention se rapporte à un ensemble de direction de véhicule automobile comportant un dispositif d'assistance électrique.

Elle concerne plus précisément un ensemble de direction assistée du type comprenant un arbre de direction rotatif portant à une extrémité un volant et à son autre extrémité un organe de transmission coopérant avec une crémaillère mobile en translation, reliée à chacune de ses extrémités à un mécanisme d'orientation des roues directrices du véhicule, le dispositif d'assistance comportant un moteur électrique qui entraîne un organe d'assistance coopérant avec la crémaillère, et un dispositif de commande fournissant audit moteur électrique un signal de commande adapté pour faire varier le couple de sortie du moteur électrique, en fonction de paramètres de fonctionnement de l'arbre de direction et/ou plus généralement du véhicule.

Un tel ensemble est connu du document US-A-5 528 492.

Dans les systèmes de direction assistée électrique connus, un moteur électrique entraîne, par l'intermédiaire d'un réducteur, un pignon engrenant avec la crémaillère de direction, de façon à transmettre à la crémaillère un effort d'assistance. Le moteur électrique est commandé par un calculateur qui applique des lois de commande préprogrammées pour tenir compte de l'évolution de paramètres de fonctionnement du véhicule et de la direction, tels que la vitesse du véhicule, le couple appliqué sur le volant et l'arbre de direction par le conducteur, et la vitesse de rotation du volant. Le calculateur délivre au moteur électrique, à partir de ces paramètres de fonctionnement et des lois de commande préprogrammées, un signal de commande de couple correspondant au couple moteur de sortie à délivrer pour exercer sur la crémaillère l'effort d'assistance désiré.

En général, il n'est pas prévu de boucle de régulation permettant de corriger le signal de commande émis vers le moteur en fonction de grandeurs mesurées ou calculées, significatives d'un couple ou d'un effort d'assistance réellement délivrés par le moteur.

Un dispositif d'assistance de ce type ne donne pas entière satisfaction du fait d'une part, que les paramètres auxquels sont appliquées les lois de commande ne permettent pas d'accéder de façon simple et précise à un effort d'assistance adapté aux sensations de l'utilisateur, et d'autre part, de la difficulté à traduire un effort d'assistance désiré en couple de sortie moteur.

En effet, pour les mêmes valeurs des paramètres cités précédemment, un même effort d'assistance est appliqué par le dispositif d'assistance, qui peut convenir par conditions de route sèche, et peut être excessif par conditions de route glissante. Dans un tel cas de « sur-assistance », le conducteur perd en grande partie les sensations d'effort sur la direction du véhicule, ce qui dégrade la sécurité de conduite.

Ensuite, pour un couple de sortie donné du moteur électrique, l'effort d'assistance effectivement appliqué sur la crémaillère diffère sensiblement de l'effort d'assistance théorique, à cause de pertes d'énergie mécanique dans le moteur électrique (inertie, frottements) et dans le mécanisme de transformation du couple moteur en effort d'assistance, à savoir notamment le réducteur et l'organe de transmission à la crémaillère. A titre d'exemple, les pertes d'énergie mécanique précitées peuvent représenter, pour certains véhicules de type berline et dans des conditions de vitesse et de braquage de volant courantes, de l'ordre de 30% pour des couples-volant variables et de 15% pour des couples-volant constants, par rapport à l'effort théorique d'assistance sur la crémaillère. Ces pertes varient sur un même véhicule au cours du temps avec l'usure des pièces mécaniques de transmission, mais aussi d'un véhicule à l'autre, ces variations étant extrêmement difficiles à modéliser.

Un but principal de l'invention est de remédier à ces inconvénients et de proposer une direction assistée électrique qui, en premier lieu, n'altère pas les sensations de conduite, et en deuxième lieu, dont le fonctionnement ne soit pas affecté par les différences existant d'un véhicule à l'autre ou par l'évolution au cours du temps des pertes d'énergie mécanique.

Dans ce but, un ensemble de direction assistée de véhicule automobile du type précité est caractérisé en ce que le dispositif d'assistance comporte des moyens d'estimation des efforts exercés par l'un au moins des mécanismes d'orientation sur la crémaillère, et le dispositif de commande est adapté pour modifier le signal de commande de couple en fonction de la valeur d'effort estimée par lesdits moyens d'estimation.

Suivant un premier mode de réalisation, un ensemble de direction assistée conforme à l'invention peut présenter une ou plusieurs des caractéristiques suivantes :

- les moyens d'estimation de l'effort comprennent un capteur de vitesse de lacet du véhicule ;
- les moyens d'estimation de l'effort comprennent un capteur de vitesse d'avance du véhicule ;
- les moyens d'estimation de l'effort comprennent un capteur d'angle de braquage du volant ;
- les moyens d'estimation de l'effort comprennent un capteur d'accélération transversale du véhicule ;
- les moyens d'estimation comprennent un organe de calcul qui calcule la valeur d'effort à partir des valeurs mesurées $\frac{d\psi}{dt}$, $V_x$, $\alpha_v$, $\gamma_t$ respectivement par le capteur de vitesse de lacet, le capteur de vitesse d'avance, le capteur d'angle de braquage, et le capteur d'accélération transversale ;
- l'organe de calcul calcule la valeur d'effort F suivant une relation du type :

$$F = k_1 \cdot \frac{d\psi}{dt} + k_2 \cdot V_x + k_3 \cdot \alpha_v + k_4 \cdot \gamma_t$$

dans laquelle : $k_1$, $k_2$, $k_3$, $k_4$ sont des coefficients prédéterminés ;

- $\frac{d\psi}{dt}$ est la vitesse de lacet mesurée ;
- $V_x^t$ est la vitesse d'avance mesurée ;
- $\alpha_v$ est l'angle de braquage mesuré ; et
- $\gamma_t$ est l'accélération transversale mesurée ;

- le dispositif d'assistance comporte des moyens de mesure de l'effort exercé par l'organe d'assistance sur la crémaillère, et le dispositif de commande est adapté pour modifier le signal de commande de couple en fonction de la valeur d'effort mesurée par lesdits moyens de mesure ;
- le dispositif de commande comporte un calculateur qui élabore, à partir de données préenregistrées et de paramètres de fonctionnement, un signal de consigne de couple, et un module de régulation qui élabore, en fonction du signal de consigne et de la valeur d'effort mesurée, le signal de commande de couple, l'un desdits paramètres de fonctionnement étant constitué par la valeur estimée de l'effort des mécanismes d'orientation sur la crémaillère ;
- le module de régulation comporte un organe de conversion qui délivre à partir de la valeur mesurée d'effort de l'organe d'assistance sur la crémaillère , un signal de mesure qui est une image de la valeur réelle du couple de sortie du moteur ;
- le module de régulation comporte un organe comparateur qui reçoit en entrée le signal de mesure du couple et le signal de consigne de couple, et délivre en sortie un signal d'écart de couple ;
- le module de régulation comporte un régulateur P. I. D. qui élabore le signal de commande de couple à partir du signal d'écart de couple ;
- le gain proportionnel du régulateur P. I. D. est préréglé à une valeur comprise entre 6 et 9 ;
- le gain intégral du régulateur P. I. D. est préréglé à une valeur comprise entre 140 et 210 ; et
- le gain différentiel du régulateur P. I. D. est préréglé à une valeur comprise entre 0,016 et 0,024.

Suivant un deuxième mode de réalisation de l'invention, le dispositif d'assistance comporte des moyens de mesure de l'effort exercé par l'organe d'assistance sur la crémaillère, et le dispositif de commande est adapté pour modifier le signal de commande de couple en fonction de la valeur d'effort mesurée par lesdits moyens de mesure.

Suivant d'autres caractéristiques de ce deuxième mode de réalisation, prises seules ou selon toutes les combinaisons techniquement envisageables :

- le dispositif de commande comporte un calculateur qui élabore, à partir de données préenregistrées et de paramètres de fonctionnement, un signal de consigne de couple, et un module de régulation qui élabore, en fonction du signal de consigne et de la valeur d'effort mesuré, le signal de commande de couple, l'un desdits paramètres de fonctionnement étant constitué par la valeur des efforts de l'un au moins des mécanismes d'orientation sur la crémaillère ;
- le module de régulation comporte un organe de conversion qui délivre à partir de la valeur d'effort mesurée de l'organe d'assistance sur la crémaillère , un signal de mesure qui est une image de la valeur réelle du couple de sortie du moteur ;
- le module de régulation comporte un organe comparateur qui reçoit en entrée le signal de mesure du couple et le signal de consigne de couple, et délivre en sortie un signal d'écart de couple ;
- le module de régulation comporte un régulateur P. I. D. qui élabore le signal de commande de couple à partir du signal d'écart de couple ;
- le gain proportionnel du régulateur P. I. D. est préréglé à une valeur comprise entre 6 et 9 ;
- le gain intégral du régulateur P. I. D. est préréglé à une valeur comprise entre 140 et 210; et
- le gain différentiel du régulateur P. I. D. est préréglé à une valeur comprise entre 0,016 et 0,024.

L'invention vise également un procédé de commande, d'un ensemble de direction assistée du type précité, selon lequel on élabore le signal de commande de couple de la façon suivante :

- on mesure l'effort exercé par l'organe d'assistance sur la crémaillère ;
- on convertit la valeur d'effort ainsi obtenue en valeur de couple réel estimée à partir des caractéristiques du réducteur, de l'organe d'assistance et de la crémaillère ;
- on estime les efforts exercés par l'un au moins des mécanismes d'orientation sur la crémaillère;
- on calcule l'écart d'une valeur de couple de consigne, déterminée à partir de données pré-enregistrées et de paramètres de fonctionnement, avec la valeur de couple réel ainsi estimé, l'un desdits paramètres de fonctionnement étant constitué par la valeur des efforts estimés des mécanismes d'orientation sur la crémaillère;
- on calcule une valeur de commande de couple au moyen d'une loi de régulation P. I. D. dont les coefficients sont prédéterminés ;
- on élabore le signal de commande de couple qui correspond à ladite valeur de commande.

Suivant un premier mode de réalisation du procédé, on estime les efforts exercés par calcul.

De préférence, on calcule les efforts des mécanismes d'orientation sur la crémaillère par les opérations suivantes :

- on mesure la vitesse de lacet du véhicule $\frac{d\psi}{dt}$ ;

- on mesure la vitesse d'avance du véhicule $V_x$;
- on mesure l'angle de braquage du volant $\alpha_v$;
- on mesure l'accélération transversale du véhicule $\gamma_t$; et
- on calcule la valeur d'efforts F suivant une relation du type :

$$F = k_1 . \frac{d\psi}{d_t} + k_2 .. V_x + k_3 . \alpha_v + k_4 . \gamma_t$$

où $k_1$, $k_2$, $k_3$, $k_4$ sont des coefficients prédéterminés.

Suivant un deuxième mode de réalisation du procédé, on estime les efforts exercés par l'un au moins des mécanismes d'orientation sur la crémaillère en mesurant lesdits efforts.

L'invention vise enfin un véhicule automobile comportant un ensemble de direction assistée électriquement, comme défini ci-dessus, ou fonctionnant suivant un procédé comme défini précédemment.

L'invention sera mieux comprise à la lecture de la description qui va suivre, donnée uniquement à titre d'exemple, et faite en se référant aux dessins annexés, sur lesquels :

- la Figure 1 est une vue schématique d'un ensemble de direction assistée suivant un premier mode de réalisation de l'invention ;
- la Figure 2 est un schéma représentant le dispositif d'assistance équipant l'ensemble de direction assistée de la Figure 1 ;
- la Figure 3 est une vue schématique d'un ensemble de direction assistée suivant un deuxième mode de réalisation de l'invention ; et
- la Figure 4 est un schéma représentant le dispositif d'assistance équipant l'ensemble de direction assistée de la Figure 3.

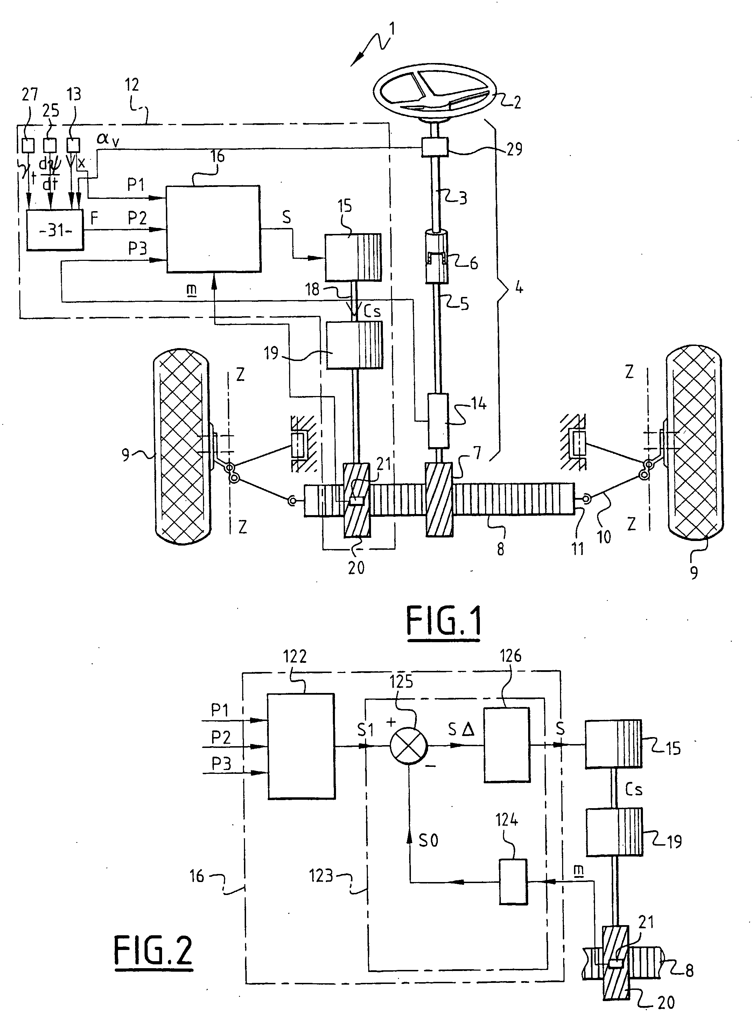

A la Figure 1, on a représenté un ensemble de direction 1 de véhicule automobile assistée électriquement, qui comporte un volant 2 solidaire d'un premier tronçon 3 d'un arbre de direction 4 relié à un deuxième tronçon 5 de cet arbre de direction 4, par l'intermédiaire d'une liaison à cardan 6. L'arbre de direction 4 est ici composé de deux tronçons 3, 5 articulés, mais pourrait être constitué d'une pièce. L'arbre de direction 4 transmet le couple appliqué sur le volant 2 par le conducteur du véhicule à un pignon de transmission 7, qui engrène avec une crémaillère de direction 8 disposée transversalement par rapport à l'axe du véhicule entre deux roues directrices 9. Le pignon de transmission 7 pourrait être remplacé par tout autre organe de transmission adapté, comme par exemple une vis sans fin. Chaque roue directrice 9 est susceptible de pivoter autour d'un axe de pivotement vertical Z-Z sous l'effet d'un déplacement linéaire de la crémaillère 8, ladite roue directrice 9 étant actionnée par un mécanisme d'orientation comportant une biellette 10 reliée à une extrémité 11 de la crémaillère 8.

L'ensemble de direction 1 comprend également un dispositif d'assistance 12 destiné à exercer sur la crémaillère 8 un effort de même sens que l'effort exercé par le pignon de transmission 7, de façon à faciliter l'actionnement du volant 2 par le conducteur du véhicule, en fonction de trois paramètres P1, P2, P3 de fonctionnement du véhicule et de fonctionnement de la direction.

Le premier paramètre P1 est constitué par la valeur de vitesse du véhicule, déterminée par des moyens classiques de mesure de la vitesse d'avance $V_x$ présents usuellement sur les véhicules, que l'on désignera par un capteur de vitesse d'avance 13.

Le deuxième paramètre P2 sera explicité plus loin.

Le troisième paramètre P3 représente le couple appliqué sur le volant 2, estimé au moyen d'un capteur de couple 14 monté sur le deuxième tronçon 5 de l'arbre de direction 4 dans une région proche du pignon de transmission 7.

Le dispositif d'assistance 12 comprend un moteur électrique 15 dont le couple de sortie $C_s$ est commandé par un dispositif électronique de commande 16 qui délivre au moteur un signal de commande de couple S. Le couple de sortie $C_s$ du moteur électrique 15 est transmis à un réducteur 19 par l'intermédiaire de l'arbre de sortie 18 du moteur 15, et à un pignon d'assistance 20 engrenant avec la crémaillère 8.

La crémaillère 8 comporte un capteur d'effort 21 adapté pour mesurer l'effort exercé par le pignon d'assistance 20 sur la crémaillère 8, et fournir au dispositif électronique de commande 16 la valeur $\underline{m}$ de l'effort ainsi mesuré.

Outre le capteur de vitesse d'avance 13, le dispositif d'assistance 12 comporte un capteur de vitesse de lacet 25 du véhicule, un capteur d'accélération transversale 27 du véhicule, ainsi qu'un capteur d'angle de braquage 29 du volant 2.

Le dispositif d'assistance 12 comporte d'autre part un organe de calcul 31 qui est relié au capteur de vitesse d'avance 13, au capteur de vitesse de lacet 25, au capteur d'accélération transversale 27, et au capteur d'angle de braquage de volant 29. L'organe de calcul 31 reçoit desdits capteurs auxquels il est relié des signaux respectifs significatifs des grandeurs mesurées, à savoir la vitesse d'avance du véhicule $V_x$, la vitesse de lacet du véhicule $\frac{d\psi}{d_t}$, l'accélération transversale du véhicule $\gamma_t$ et l'angle de braquage du volant $\alpha_v$.

L'organe de calcul 31 traite les grandeurs mesurées $V_x$, $\frac{d\psi}{d_t}$, $\lambda_t$, $\alpha_v$, de façon à obtenir une valeur d'effort résultant F des biellettes 10 sur la crémaillère 8, suivant la relation suivante :

$$F = k_1 . \frac{d\psi}{dt} + k_2 .. V_x + k_3 . \alpha_v + k_4 . \gamma_t$$

où $k_1$, $k_2$, $k_3$, $k_4$ sont des coefficients prédéterminés et préenregistrés dans l'organe de calcul 31.

On entend par effort résultant F la somme des efforts exercés par les biellettes 10 sur la crémaillère 3, ou l'effort moyen.

Le deuxième paramètre P2 fourni au dispositif électronique de commande est constitué par cette valeur F estimée de l'effort exercé par les biellettes 10 sur la crémaillère 8.

Comme représenté à la Figure 2, le dispositif électronique de commande 16 comprend un calculateur 122 et un module de régulation 123. Le calculateur 122 reçoit les paramètres de fonctionnement P1, P2, P3 et leur applique des lois de commande préenregistrées afin d'élaborer et d'émettre vers une première entrée du module de régulation 123 un signal de consigne de couple S1.

Le signal représentatif de la valeur $\underline{m}$ de l'effort du pignon d'assistance 20 sur la crémaillère 8 mesuré par le capteur d'effort correspondant 21 est envoyé vers une deuxième entrée du module de régulation 123, ce dernier comprenant un organe de conversion 124 qui délivre à partir de la valeur d'effort mesurée $\underline{m}$, un signal de mesure S0 qui est une image de la valeur réelle du couple de sortie du moteur Cs.

Le module de régulation 123 comprend par ailleurs un comparateur 125 qui reçoit en entrée le signal de mesure de couple S0 et le signal de consigne de couple S1 délivré par le calculateur 122, et qui délivre en sortie un signal d'écart de couple $S_\Delta$ transmis à un régulateur P.I.D. 126. Ce régulateur 126 applique au signal de couple $S_\Delta$ une loi proportionnelle/intégrale/dérivée, afin d'élaborer le signal de commande de couple S qui est ensuite appliqué au moteur électrique 15. Les coefficients de gain proportionnel/intégrateur/dérivé $K_p$, $K_i$, $K_d$, appliqués dans la loi de régulation, sont par exemple respectivement de l'ordre de : 7.5 ; 175 ; 0.02.

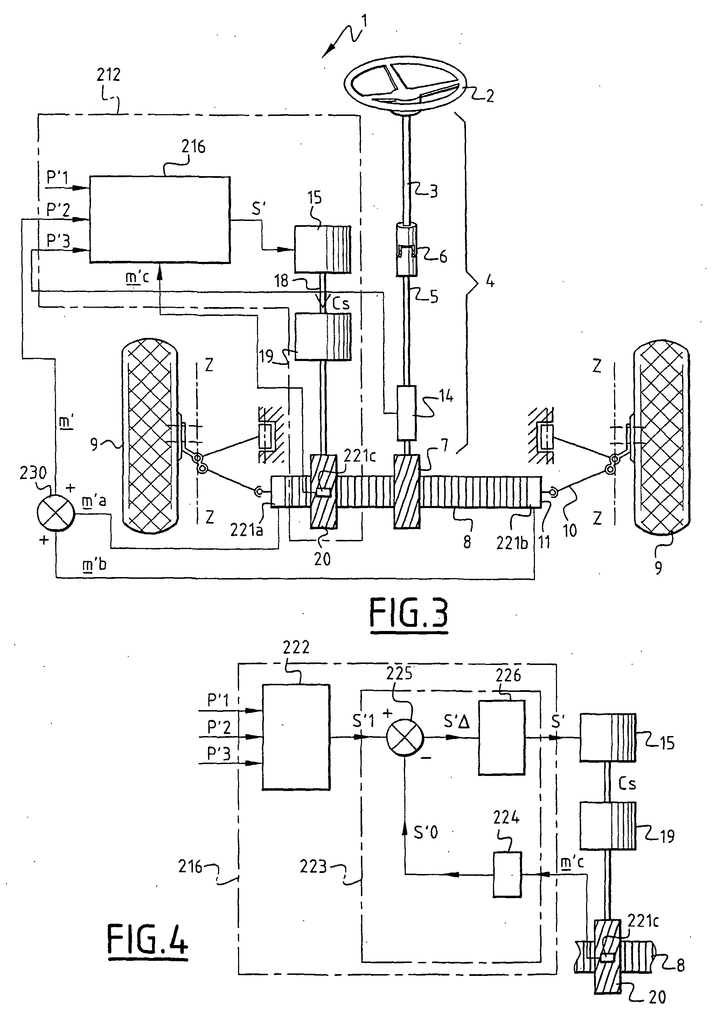

A la Figure 3, on a représenté un ensemble de direction 1 de véhicule automobile assistée électriquement, qui comporte un volant 2 solidaire d'un premier tronçon 3 d'un arbre de direction 4 relié à un deuxième tronçon 5 de cet arbre de direction 4, par l'intermédiaire d'une liaison à cardan 6. L'arbre de direction 4 est ici composé de deux tronçons 3, 5 articulés, mais pourrait être constitué d'une pièce. L'arbre de direction 4 transmet le couple appliqué sur le volant 2 par le conducteur du véhicule à un pignon de transmission 7, qui engrène avec une crémaillère de direction 8 disposée transversalement par rapport à l'axe du véhicule entre deux roues directrices 9. Le pignon de transmission 7 pourrait être remplacé par tout autre organe de transmission adapté, comme par exemple une vis sans fin. Chaque roue directrice 9 est susceptible de pivoter autour d'un axe de pivotement vertical Z-Z sous l'effet d'un déplacement linéaire de la crémaillère 8, ladite roue directrice 9 étant actionnée par un mécanisme d'orientation comportant une biellette 10 reliée à une extrémité 11 de la crémaillère 8.

L'ensemble de direction 1 comprend également un dispositif d'assistance 212 destiné à exercer sur la crémaillère 8 un effort de même sens que l'effort exercé par le pignon de transmission 7, de façon à faciliter l'actionnement du volant 2 par le conducteur du véhicule, en fonction de trois paramètres P'1, P'2, P'3 de fonctionnement du véhicule et de fonctionnement de la direction.

Le premier paramètre P'1 est constitué par la valeur de vitesse du véhicule, déterminée par des moyens classiques de mesure de la vitesse présents usuellement sur les véhicules.

Le deuxième paramètre P'2 sera explicité plus loin.

Le troisième paramètre P'3 représente le couple appliqué sur le volant 2, estimé au moyen d'un capteur de couple 14 monté sur le deuxième tronçon 5 de l'arbre de direction 4 dans une région proche du pignon de transmission 7.

Le dispositif d'assistance 212 comprend un moteur électrique 15 dont le couple de sortie $C_s$ est commandé par un dispositif électronique de commande 216 qui délivre au moteur un signal de commande de couple S'. Le couple de sortie $C_s$ du moteur électrique 15 est transmis à un réducteur 19 par l'intermédiaire de l'arbre de sortie 18 du moteur 15, et à un pignon d'assistance 20 engrenant avec la crémaillère 8.

La crémaillère comporte respectivement à ses deux extrémités 11 un premier et deuxième capteurs d'effort 221a, 221b adaptés pour mesurer l'effort exercé par chacune des biellettes 10 respectives sur la crémaillère 8, et fournir à l'organe électronique de commande 216, après sommation des valeurs obtenues $\underline{m}$'a, $\underline{m}$'b par un sommateur 230, la valeur $\underline{m}$' de l'effort résultant des efforts ainsi mesurés.

Le deuxième paramètre P'2 est constitué par cette valeur $\underline{m}$' des efforts exercés par les biellettes 10 sur la crémaillère 8.

La crémaillère 8 comporte d'autre part un troisième capteur d'effort 221c adapté pour mesurer l'effort exercé par le pignon d'assistance 20 sur la crémaillère 8, et fournir au dispositif électronique de commande 216 la valeur $\underline{m}$'c de l'effort ainsi mesuré.

Comme représenté à la Figure 4, le dispositif électronique de commande 216 comprend un calculateur 222 et un module de régulation 223. Le calculateur 222 reçoit les paramètres de fonctionnement P'1, P'2, P'3 et leur applique des lois de commande préenregistrées afin d'élaborer et d'émettre vers une première entrée du module de régulation 223 un signal de consigne de couple S'1.

Le signal représentatif de la valeur $\underline{m}$'c de l'effort du pignon d'assistance 20 sur la crémaillère 8 mesuré par le capteur d'effort correspondant 221c est envoyé vers une deuxième entrée du module de régulation 223, ce dernier comprenant un organe de conversion 224 qui délivre à partir de la valeur d'effort mesurée $\underline{m}$'c,

un signal de mesure S'0 qui est une image de la valeur réelle du couple de sortie du moteur Cs.

Le module de régulation 223 comprend par ailleurs un comparateur 225 qui reçoit en entrée le signal de mesure de couple S'0 et le signal de consigne de couple S'1 délivré par le calculateur 222, et qui délivre en sortie un signal d'écart de couple S'$_\Delta$ transmis à un régulateur P.I.D. 226. Ce régulateur 226 applique au signal de couple S'$_\Delta$ une loi proportionnelle/intégrale/dérivée, afin d'élaborer le signal de commande de couple S' qui est ensuite appliqué au moteur électrique 15.

Les coefficients de gain proportionnel/intégrateur/dérivé K'$_p$, K'$_i$, K'$_d$, appliqués dans la loi de régulation, sont par exemple respectivement de l'ordre de : 7.5 ; 175 ; 0.02.

Les ensembles de direction assistée électrique et les procédés de commande associés tels que définis dans l'invention, procurent un effort d'assistance tenant compte des efforts réels exercés par les pièces de transmission de direction liées aux roues sur la crémaillère, et régulé de façon à compenser aussi bien les effets de l'usure des pièces mécaniques de transmission de la direction, tout au long de la durée de vie du véhicule, que les variations des caractéristiques mécaniques d'un véhicule à l'autre, et les variations de ces caractéristiques suivant les conditions d'utilisation du véhicule.

## Revendications

**1.** Ensemble de direction assistée électrique comprenant un arbre de direction rotatif (4) portant à une extrémité un volant (2) et à son autre extrémité un organe de transmission (7) coopérant avec une crémaillère (8) mobile en translation, reliée à chacune de ses extrémités (11) à un mécanisme (10) d'orientation des roues directrices du véhicule, le dispositif d'assistance (12 ; 212) comportant un moteur électrique (15) qui entraîne un organe d'assistance (20) coopérant avec la crémaillère (8), et un dispositif de commande (16 ; 216) fournissant audit moteur électrique (15) un signal de commande (S ; S') adapté pour faire varier le couple de sortie (Cs) du moteur électrique (15), en fonction de paramètres de fonctionnement de l'arbre de direction et/ou plus généralement du véhicule, **caractérisé en ce que** le dispositif d'assistance (12 ; 212) comporte des moyens d'estimation (13, 25, 27, 29, 31 ; 221a, 221b) des efforts exercés par l'un au moins des mécanismes d'orientation (10) sur la crémaillère (8), et le dispositif de commande (16 ; 216) est adapté pour modifier le signal de commande de couple (S ; S') en fonction de la valeur d'effort (F ; m') estimée par lesdits moyens d'estimation (13, 25, 27, 29, 31 ; 221 a, 221 b).

**2.** Ensemble de direction assistée électrique suivant la revendication 1, **caractérisé en ce que** les moyens d'estimation (13, 25, 27, 29, 31) de l'effort (F) comprennent un capteur de vitesse de lacet (25) du véhicule.

**3.** Ensemble de direction assistée électrique suivant la revendication 1, **caractérisé en ce que** les moyens d'estimation (13, 25, 27, 29, 31) de l'effort (F) comprennent un capteur de vitesse d'avance (13) du véhicule.

**4.** Ensemble de direction assistée électrique suivant la revendication 1, **caractérisé en ce que** les moyens d'estimation (13, 25, 27, 29, 31) de l'effort (F) comprennent un capteur d'angle de braquage (29) du volant (2).

**5.** Ensemble de direction assistée électrique suivant la revendication 1, **caractérisé en ce que** les moyens d'estimation (13, 25, 27, 29, 31) de l'effort (F) comprennent un capteur d'accélération transversale (27) du véhicule.

**6.** Ensemble de direction assistée électrique suivant les revendications 2 à 5 prises ensembles, **caractérisé en ce que** les moyens d'estimation (13, 25, 27, 29, 31) comprennent un organe de calcul (31) qui calcule la valeur d'effort (F) à partir des valeurs mesurées ($\frac{d\psi}{dt}$, V$_X$, $\alpha_V$, $\gamma_t$) respectivement par le capteur de vitesse de lacet (25), le capteur de vitesse d'avance (13), le capteur d'angle de braquage (29), et le capteur d'accélération transversale (27).

**7.** Ensemble de direction assistée électrique suivant la revendication 6, **caractérisé en ce que** l'organe de calcul (31) calcule la valeur d'effort (F) suivant une relation du type :

$$F = k_1 \cdot \frac{d\psi}{dt} + k_2 \cdot\cdot V_x + k_3 \cdot \alpha_v + k_4 \cdot \gamma_t$$

dans laquelle : k$_1$, k$_2$, k$_3$, k$_4$ sont des coefficients prédéterminés ;

. $\frac{d\psi}{dt}$ est la vitesse de lacet mesurée ;
. V$_x^t$ est la vitesse d'avance mesurée ;
. $\alpha_v$ est l'angle de braquage mesuré ; et
. $\gamma_t$ est l'accélération transversale mesurée.

**8.** Ensemble de direction assistée électrique suivant l'une quelconque des revendications 1 à 7, **caractérisé en ce que** le dispositif d'assistance (12) comporte des moyens de mesure (21) de l'effort exercé par l'organe d'assistance (20) sur la crémaillère (8), et le dispositif de commande (16) est adapté pour modifier le signal de commande de couple (S) en fonction de la valeur d'effort (m) mesurée par lesdits moyens de mesure (21).

**9.** Ensemble de direction assistée électrique suivant la revendication 8, **caractérisée en ce que** le dispositif de commande (16) comporte un calculateur (122) qui élabore, à partir de données préenregistrées et de paramètres de fonctionnement (P1, P2, P3), un signal de consigne de couple (S1), et un module de régulation (123) qui élabore, en fonction du signal de consigne (S1) et de la valeur d'effort mesurée ($\underline{m}$), le signal de commande de couple (S), l'un desdits paramètres de fonctionnement (P2) étant constitué par la valeur estimée (F) de l'effort des mécanismes d'orientation (10) sur la crémaillère (8).

**10.** Ensemble de direction assistée électrique suivant la revendication 9, **caractérisée en ce que** le module de régulation (123) comporte un organe de conversion (124) qui délivre à partir de la valeur mesurée ($\underline{m}$) d'effort de l'organe d'assistance (20) sur la crémaillère (8), un signal de mesure (S0) qui est une image de la valeur réelle du couple de sortie (Cs) du moteur (15).

**11.** Ensemble de direction assistée électrique suivant la revendication 10, **caractérisé en ce que** le module de régulation (123) comporte un organe comparateur (125) qui reçoit en entrée le signal de mesure du couple (S0) et le signal de consigne de couple (S1), et délivre en sortie un signal d'écart de couple ($S_\Delta$).

**12.** Ensemble de direction assistée électrique suivant la revendication 11, **caractérisé en ce que** le module de régulation (123) comporte un régulateur P. I. D. (126) qui élabore le signal de commande de couple (S) à partir du signal d'écart de couple ($S_\Delta$).

**13.** Ensemble de direction assistée électrique suivant la revendication 12, **caractérisé en ce que** le gain proportionnel ($K_p$) du régulateur P. I. D. (126) est préréglé à une valeur comprise entre 6 et 9.

**14.** Ensemble de direction assistée électrique suivant la revendication 12, **caractérisé en ce que** le gain intégral ($K_i$) du régulateur P. I. D. (126) est préréglé à une valeur comprise entre 140 et 210.

**15.** Ensemble de direction assistée électrique suivant la revendication 12, **caractérisé en ce que** le gain différentiel ($K_d$) du régulateur P. I. D. (126) est préréglé à une valeur comprise entre 0,016 et 0,024.

**16.** Ensemble de direction assistée électrique suivant la revendication 1, **caractérisé en ce que** les moyens d'estimation (221a, 221b) sont des moyens de mesure des efforts exercés par l'un au moins des mécanismes d'orientation (10) sur la crémaillère (8).

**17.** Ensemble de direction assistée électrique suivant la revendication 16, **caractérisé en ce que** le dispositif d'assistance (112) comporte des moyens de mesure (221c) de l'effort exercé par l'organe d'assistance (20) sur la crémaillère (8), et le dispositif de commande (216) est adapté pour modifier le signal de commande de couple (S') en fonction de la valeur d'effort ($\underline{m'c}$) mesurée par lesdits moyens de mesure (221c).

**18.** Ensemble de direction assistée électrique suivant la revendication 17, **caractérisé en ce que** le dispositif de commande (216) comporte un calculateur (222) qui élabore, à partir de données préenregistrées et de paramètres de fonctionnement (P'1, P'2, P'3), un signal de consigne de couple (S'1), et un module de régulation (223) qui élabore, en fonction du signal de consigne (S'1) et de la valeur d'effort mesurée ($\underline{m'c}$), le signal de commande de couple (S'), l'un desdits paramètres de fonctionnement (P'2) étant constitué par la valeur ($\underline{m'}$) des efforts de l'un au moins des mécanismes d'orientation (10) sur la crémaillère (8).

**19.** Ensemble de direction assistée électrique suivant la revendication 18, **caractérisé en ce que** le module de régulation (223) comporte un organe de conversion (224) qui délivre à partir de la valeur d'effort mesurée ($\underline{m'c}$) de l'organe d'assistance (20) sur la crémaillère (8), un signal de mesure (S'0) qui est une image de la valeur réelle du couple de sortie (Cs) du moteur (15).

**20.** Ensemble de direction assistée électrique suivant la revendication 19, **caractérisé en ce que** le module de régulation (223) comporte un organe comparateur (225) qui reçoit en entrée le signal de mesure du couple (S'0) et le signal de consigne de couple (S'1), et délivre en sortie un signal d'écart de couple ($S'_\Delta$).

**21.** Ensemble de direction assistée électrique suivant la revendication 20, **caractérisé en ce que** le module de régulation (223) comporte un régulateur P. I. D. (226) qui élabore le signal de commande de couple (S') à partir du signal d'écart de couple ($S'_\Delta$).

**22.** Ensemble de direction assistée électrique suivant la revendication 21, **caractérisé en ce que** le gain proportionnel ($K'_p$) du régulateur P. I. D. (226) est préréglé à une valeur comprise entre 6 et 9.

**23.** Ensemble de direction assistée électrique suivant la revendication 21, **caractérisé en ce que** le gain intégral ($K'_i$) du régulateur P. I. D. (226) est préréglé à une valeur comprise entre 140 et 210.

**24.** Ensemble de direction assistée électrique suivant la revendication 21, **caractérisé en ce que** le gain différentiel (K'$_d$) du régulateur P. I. D. (226) est préréglé à une valeur comprise entre 0,016 et 0,024.

25. Procédé de commande, par un signal de commande de couple, d'un moteur électrique de dispositif d'assistance électrique d'un ensemble de direction de véhicule automobile, comprenant un arbre de direction rotatif (4) portant à une extrémité un volant (2) et à son autre extrémité un organe de transmission (7) coopérant avec une crémaillère (8) mobile en translation, reliée à chacune de ses extrémités (11) à un mécanisme (10) d'orientation des roues directrices du véhicule, le dispositif d'assistance (12 ; 212) comportant un moteur électrique (15) qui entraîne un organe d'assistance (20) coopérant avec la crémaillère (8), et un dispositif de commande (16 ; 216) fournissant audit moteur électrique (15) un signal de commande (S ; S') adapté pour faire varier le couple de sortie (Cs) du moteur électrique (15), **caractérisé en ce qu'**on élabore le signal de commande de couple (S; S') de la façon suivante :

   - on mesure l'effort exercé par l'organe d'assistance (20) sur la crémaillère (8);
   - on convertit la valeur d'effort (m ; m'c) ainsi obtenue en valeur de couple réel estimée à partir des caractéristiques d'un réducteur (19), de l'organe d'assistance (20) et de la crémaillère (8) ;
   - on estime les efforts exercés par l'un au moins des mécanismes d'orientation (10) sur la crémaillère (8) ;
   - on calcule l'écart d'une valeur de couple de consigne, déterminée à partir de données préenregistrées et de paramètres de fonctionnement (P1, P2, P3 ; P'1, P'2, P'3), avec la valeur de couple réel ainsi estimé, l'un desdits paramètres de fonctionnement (P2 ; P'2) étant constitué par la valeur des efforts estimés (F ; m') des mécanismes d'orientation (10) sur la crémaillère (8) ;
   - on calcule une valeur de commande de couple au moyen d'une loi de régulation P. I. D. dont les coefficients (K$_p$, K$_i$, K$_d$ ; K'$_p$, K'$_i$, K'$_d$) sont prédéterminés;
   - on élabore le signal de commande de couple (S ; S') qui correspond à ladite valeur de commande.

26. Procédé de commande suivant la revendication 25, **caractérisé en ce qu'**on estime les efforts exercés par l'un au moins des mécanismes d'orientation (10) sur la crémaillère (8) par calcul.

27. Procédé de commande suivant la revendication 26, **caractérisé en ce qu'**on calcule les efforts des mécanismes d'orientation (10) sur la crémaillère (8) par les opérations suivantes :

   - on mesure la vitesse de lacet du véhicule $\frac{d\psi}{dt}$;
   - on mesure la vitesse d'avance du véhicule $V_x$;
   - on mesure l'angle de braquage du volet $\alpha_v$;
   - on mesure l'accélération transversale du véhicule $\gamma_t$; et
   - on calcule la valeur d'efforts F suivant une relation du type :

$$F = k_1.\frac{d\psi}{dt} + k_2..V_x + k_3.\alpha_v + k_4.\gamma_t$$

où $k_1$, $k_2$, $k_3$, $k_4$ sont des coefficients prédéterminés.

28. Procédé de commande suivant la revendication 25, **caractérisé en ce qu'**on estime les efforts exercés par l'un au moins des mécanismes d'orientation (10) sur la crémaillère (8) en mesurant lesdits efforts.

29. Véhicule automobile comportant un ensemble de direction assistée conforme à l'une quelconque des revendications 1 à 24, ou fonctionnant suivant un procédé conforme à l'une quelconque des revendications 25 à 28.

**Patentansprüche**

1. Elektrische Servolenkeinrichtung, umfassend eine rotierende Lenkwelle (4), die an einem Ende ein Lenkrad (2) und an ihrem anderen Ende ein Übertragungsorgan (7) trägt, das mit einer translationsbeweglichen Zahnstange (8) zusammenwirkt, die an jedem ihrer Enden (11) mit einem Mechanismus (10) zum Verschwenken der gelenkten Räder des Fahrzeugs verbunden ist, wobei die Servovorrichtung (12; 212) einen Elektromotor (15), der ein mit der Zahnstange (8) zusammenwirkendes Servoorgan (20) antreibt, und eine Steuervorrichtung (16; 216) umfasst, die dem Elektromotor (15) ein Steuersignal (S; S') liefert, das dafür ausgelegt ist, das Ausgangsdrehmoment (Cs) des Elektromotors (15) in Abhängigkeit von Betriebsparametern der Lenkwelle und/oder allgemeiner des Fahrzeugs sich ändern zu lassen, **dadurch gekennzeichnet, dass** die Servovorrichtung (12; 212) Mittel (13, 25, 27, 29, 31; 221a, 221b) zum Schätzen der von mindestens einem der Schwenkmechanismen (10) auf die Zahnstange (8) ausgeübten Kräfte aufweist und die Steuervorrichtung (16; 216) dafür ausgelegt ist, das Signal zur Steuerung des Drehmoments (S; S') in Abhängigkeit von dem von den Schätzmitteln (13, 25, 27, 29, 31; 221a, 221b) geschätzten Kraftwert (F; m') zu ändern.

**2.** Elektrische Servolenkeinrichtung nach Anspruch 1, **dadurch gekennzeichnet, dass** die Mittel (13, 25, 27, 29, 31) zum Schätzen der Kraft (F) einen Fühler (25) für die Giergeschwindigkeit des Fahrzeugs umfassen.

**3.** Elektrische Servolenkeinrichtung nach Anspruch 1, **dadurch gekennzeichnet, dass** die Mittel (13, 25, 27, 29, 31) zum Schätzen der Kraft (F) einen Fühler (13) für die Fahrgeschwindigkeit des Fahrzeugs umfassen.

**4.** Elektrische Servolenkeinrichtung nach Anspruch 1, **dadurch gekennzeichnet, dass** die Mittel (13, 25, 27, 29, 31) zum Schätzen der Kraft (F) einen Fühler (29) für den Einschlagwinkel des Lenkrads (2) umfassen.

**5.** Elektrische Servolenkeinrichtung nach Anspruch 1, **dadurch gekennzeichnet, dass** die Mittel (13, 25, 27, 29, 31) zum Schätzen der Kraft (F) einen Fühler (27) für die Querbeschleunigung des Fahrzeugs umfassen.

**6.** Elektrische Servolenkeinrichtung nach den Ansprüchen 1 bis 5 zusammen, **dadurch gekennzeichnet, dass** die Schätzmittel (13, 25, 27, 29, 31) ein Rechenorgan (31) umfassen, das den Kraftwert (F) aus Werten ($d\psi/d_t$, $V_X$, $\alpha_V$, $\gamma_t$) errechnet, die von dem Giergeschwindigkeitsfühler (25), dem Fahrgeschwindigkeitsfühler (13), dem Einschlagwinkelfühler (29) bzw. dem Querbeschleunigungsfühler (27) gemessen werden.

**7.** Elektrische Servolenkeinrichtung nach Anspruch 6, **dadurch gekennzeichnet, dass** das Rechenorgan (31) den Kraftwert (F) nach einer Gleichung vom Typ

$$F = k_1.d\psi/d_t, + k_2 \cdot V_X + k_3 \cdot \alpha_V + k_4 \cdot \gamma_t$$

errechnet, in der:

$k_1$, $k_2$, $k_3$, $k_4$ vorbestimmte Koeffizienten sind; $d\psi/d_t$ die gemessene Giergeschwindigkeit ist; $V_X$ die gemessene Fahrgeschwindigkeit ist; $\alpha_V$ der gemessene Einschlagwinkel ist; und $\gamma_t$ die gemessene Querbeschleunigung ist.

**8.** Elektrische Servolenkeinrichtung nach einem der Ansprüche 1 bis 7, **dadurch gekennzeichnet, dass** die Servovorrichtung (12) Mittel (21) zum Messen der von dem Servoorgan (20) auf die Zahnstange (8) ausgeübten Kraft umfasst und die Steuervorrichtung (16) dafür ausgelegt ist, das Drehmomentsteuersignal (S) in Abhängigkeit von dem von den Messmitteln (21) gemessenen Kraftwert (m) zu ändern.

**9.** Elektrische Servolenkeinrichtung nach Anspruch 8, **dadurch gekennzeichnet, dass** die Steuervorrichtung (16) einen Rechner (122), der aus vorgespeicherten Daten und Betriebsparametern (P1, P2, P3) ein Drehmomentsollwertsignal (S1) herstellt, und ein Regelmodul (123) aufweist, das in Abhängigkeit von dem Sollwertsignal (S1) und dem gemessenen Kraftwert (m) das Drehmomentsteuersignal (S) herstellt, wobei einer der Betriebsparameter (P2) von dem geschätzten Wert (F) der Kraft der Schwenkmechanismen (10) auf die Zahnstange (8) gebildet ist.

**10.** Elektrische Servolenkeinrichtung nach Anspruch 9, **dadurch gekennzeichnet, dass** das Regelmodul (123) ein Umwandlungsorgan (124) aufweist, das aus dem gemessenen Wert (m) der Kraft des Servoorgans (20) auf die Zahnstange (8) ein Messsignal (S0) liefert, das ein Bild des tatsächlichen Werts des Ausgangsdrehmoments (Cs) des Motors (15) ist.

**11.** Elektrische Servolenkeinrichtung nach Anspruch 10, **dadurch gekennzeichnet, dass** das Regelmodul (123) ein Vergleichsorgan (125) aufweist, das als Eingang das Messsignal (S0) des Drehmoments und das Drehmomentsollwertsignal (S1) erhält und als Ausgang ein Drehmomentabweichungssignal ($S_\Delta$) liefert.

**12.** Elektrische Servolenkeinrichtung nach Anspruch 11, **dadurch gekennzeichnet, dass** das Regelmodul (123) einen PID-Regler (126) aufweist, der aus dem Drehmomentsabweichungssignal ($S_\Delta$) das Drehmomentsteuersignal (S) herstellt.

**13.** Elektrische Servolenkeinrichtung nach Anspruch 12, **dadurch gekennzeichnet, dass** die Proportionalverstärkung ($K_p$) des PID-Reglers (126) auf einen Wert zwischen 6 und 9 voreingestellt ist.

**14.** Elektrische Servolenkeinrichtung nach Anspruch 12, **dadurch gekennzeichnet, dass** die Integralverstärkung ($K_i$) des PID- Reglers (126) auf einen Wert zwischen 140 und 210 voreingestellt ist.

**15.** Elektrische Servolenkeinrichtung nach Anspruch 12, **dadurch gekennzeichnet, dass** die Differentialverstärkung ($K_d$) des PID-Reglers (126) auf einen Wert zwischen 0,016 und 0,024 voreingestellt ist.

**16.** Elektrische Servolenkeinrichtung nach Anspruch 1, **dadurch gekennzeichnet, dass** die Schätzmittel (221a, 221b) Mittel zum Messen der von mindestens einem der Schwenkmechanismen (10) auf die Zahnstange (8) ausgeübten Kräfte sind.

**17.** Elektrische Servolenkeinrichtung nach Anspruch 16, **dadurch gekennzeichnet, dass** die Servovorrichtung (112) Mittel (221c) zum Messen der von dem Servoorgan (20) auf die Zahnstange (8) ausgeübten Kraft aufweist und die Steuervorrichtung (216) dafür ausgelegt ist, in Abhängigkeit von dem von diesen Messmitteln (221c) gemessenen Kraftwert (m'c) das Drehmomentsteuersignal (S') zu ändern.

**18.** Elektrische Servolenkeinrichtung nach Anspruch 17, **dadurch gekennzeichnet, dass** die Steuervorrichtung (216) einen Rechner (222), der ausgehend von den vorgespeicherten Daten und Betriebsparametern (P'1, P'2, P'3) ein Drehmomentsollwertsignal (S'1) herstellt, und ein Regelmodul (223) aufweist, das in Abhängigkeit von dem Sollwertsignal (S'1) und dem gemessenen Kraftwert (m'c) das Drehmomentsteuersignal (S') herstellt, wobei einer dieser Betriebsparameter (P'2) von dem Wert (m') der Kräfte mindestens eines der Schwenkmechanismen (10) auf die Zahnstange (8) gebildet ist.

**19.** Elektrische Servolenkeinrichtung nach Anspruch 18, **dadurch gekennzeichnet, dass** das Regelmodul (223) ein Umwandlungsorgan (224) aufweist, das ausgehend von dem gemessenen Wert (m'c) der Kraft des Servoorgans (20) auf die Zahnstange (8) ein Messsignal (S'0) liefert, das ein Bild des tatsächlichen Werts des Ausgangsdrehmoments (Cs) des Motors (15) ist.

**20.** Elektrische Servolenkeinrichtung nach Anspruch 19, **dadurch gekennzeichnet, dass** das Regelmodul (223) ein Vergleichsorgan (225) aufweist, das als Eingang das Messsignal des Drehmoments (S'0) und das Drehmomentsollwertsignal (S'1) erhält und als Ausgang ein Drehmomentsabweichungssignal (S'$_\Delta$) liefert.

**21.** Elektrische Servolenkeinrichtung nach Anspruch 20, **dadurch gekennzeichnet, dass** das Regelmodul (223) einen PID-Regler (226) aufweist, der ausgehend von dem Drehmomentabweichungssignal (S'$_\Delta$) das Drehmomentsteuersignal (S') herstellt.

**22.** Elektrische Servolenkeinrichtung nach Anspruch 21, **dadurch gekennzeichnet, dass** die Proportionalverstärkung (K'$_p$) des PID-Reglers (226) auf einen Wert zwischen 6 und 9 voreingestellt ist.

**23.** Elektrische Servolenkeinrichtung nach Anspruch 21, **dadurch gekennzeichnet, dass** die Integralverstärkung (K'$_i$) des PID-Reglers (226) auf einen Wert zwischen 140 und 210 voreingestellt ist.

**24.** Elektrische Servolenkeinrichtung nach Anspruch 21, **dadurch gekennzeichnet, dass** die Differentialverstärkung (K'd) des PID-Reglers (226) auf einen Wert zwischen 0,016 und 0,024 voreingestellt ist.

**25.** Verfahren zur Steuerung eines Elektromotors einer elektrischen Servolenkvorrichtung einer Kraftfahrzeug-Lenkeinrichtung durch ein Drehmomentsteuersignal, wobei die Lenkeinrichtung eine rotierende Lenkwelle (4) umfasst, die an einem Ende ein Lenkrad (2) und an ihrem anderen Ende ein Übertragungsorgan (7) trägt, das mit einer translationsbeweglichen Zahnstange (8)zusammenarbeitet, die an jedem ihrer Enden (11) mit einem Mechanismus (10) zum Verschwenken der gelenkten Räder des Fahrzeugs verbunden ist, wobei die Servovorrichtung (12; 212) einen Elektromotor (15), der ein mit der Zahnstange (8) zusammenwirkendes Servoorgan (20) antreibt, und eine Steuervorrichtung (16; 216) aufweist, die dem Elektromotor (15) ein Steuersignal (S; S') liefert, das dafür ausgelegt ist, das Ausgangsdrehmoment (Cs) des Elektromotors (15) sich ändern zu lassen, **dadurch gekennzeichnet, dass** man das Drehmomentsteuersignal (S, S') auf folgende Weise herstellt:

- man misst die von dem Servoorgan (20) auf die Zahnstange (8) ausgeübte Kraft;
- man wandelt den auf diese Weise erhaltenen Kraftwert (m, m'c) in einen tatsächlichen Drehmomentwert um, der ausgehend von den Merkmalen eines Untersetzungsgetriebes (19), des Servoorgans (20) und der Zahnstange (8) geschätzt wird;
- man schätzt die von mindestens einem der Schwenkmechanismen (10) auf die Zahnstange (8) ausgeübten Kräfte;
- man errechnet die Abweichung eines Drehmomentsollwerts, der ausgehend von vorgespeicherten Daten und Betriebsparametern (P1, P2, P3; P'1, P'2, P'3) bestimmt wird, von dem auf diese Weise geschätzten tatsächlichen Drehmomentwert, wobei einer der Betriebsparameter (P2; P'2) von dem Wert der geschätzten Kräfte (F; m') der Schwenkmechanismen (10) auf die Zahnstange (8) gebildet wird;
- man errechnet einen Drehmomentsteuerwert mit Hilfe einer PID-Regelgesetzmäßigkeit, deren Koeffizienten (K$_p$, K$_i$, K$_d$; K'$_p$, K'$_i$, K'$_d$) vorbestimmt sind;
- man stellt das Drehmomentsignal (S; S') her, das diesem Steuerwert entspricht.

**26.** Steuerverfahren nach Anspruch 25, **dadurch gekennzeichnet, dass** man die von mindestens einem der Schwenkmechanismen (10) auf die Zahnstange (8) ausgeübten Kräfte durch Berechnung schätzt.

**27.** Steuerverfahren nach Anspruch 26, **dadurch gekennzeichnet, dass** man die Kräfte der Schwenkmechanismen (10) auf die Zahnstange (8) durch die folgenden Operationen berechnet:

- man misst die Giergeschwindigkeit $d\psi/d_t$ des Fahrzeugs;
- man misst die Fahrgeschwindigkeit $V_X$ des Fahrzeugs;
- man misst den Einschlagwinkel $\alpha_V$ des Lenkrads;
- man misst die Querbeschleunigung $\gamma_t$ des Fahrzeugs; und
- man errechnet den Kraftwert F nach einer Gleichung vom Typ:

$$F = k_1 \cdot d\psi/d_t, + k_2 \cdot V_X + k_3 \cdot \alpha_V + k_4 \cdot \gamma_t$$

in der $k_1$, $k_2$, $k_3$, $k_4$ vorbestimmte Koeffizienten sind.

**28.** Steuerverfahren nach Anspruch 25, **dadurch gekennzeichnet, dass** man die von mindestens einem der Schwenkmechanismen (10) auf die Zahnstange (8) ausgeübten Kräfte schätzt, indem man diese Kräfte misst.

**29.** Kraftfahrzeug, die eine Servolenkeinrichtung umfasst, die nach einem der Ansprüche 1 bis 24 ist oder gemäß einem Verfahren nach einem der Ansprüche 25 bis 28 arbeitet.

**Claims**

**1.** Electric power steering system comprising a rotatable steering shaft (4) carrying at one end a steering wheel (2) and at its other end a transmission unit (7) cooperating with a rack (8) which is movable in translation and connected at each of its ends (11) to a steering mechanism (10) for the steered wheels of the vehicle, the assistance device (12; 212) comprising an electric motor (15) which drives an assistance unit (20) cooperating with the rack (8), and a control device (16; 216) providing said electric motor (15) with a control signal (S; S') adapted to vary the output torque (Cs) of the electric motor (15) as a function of operating parameters of the steering shaft and/or more generally of the vehicle, **characterised in that** the assistance device (12; 212) comprises means (13, 25, 27, 29, 31; 221a, 221b) for estimating the forces exerted by at least one of the steering mechanisms (10) on the rack (8), and the control device (16; 216) is adapted to modify the torque control signal (S; S') as a function of the force value (F; m') estimated by said estimation means (13, 25, 27, 29, 31; 221a, 221b).

**2.** Electric power steering system according to claim 1, **characterised in that** the means (13, 25, 27, 29, 31) for estimating the force (F) comprise a vehicle yaw speed sensor (25).

**3.** Electric power steering system according to claim 1, **characterised in that** the means (13, 25, 27, 29, 31) for estimating the force (F) comprise a vehicle advance speed sensor (13).

**4.** Electric power steering system according to claim 1, **characterised in that** the means (13, 25, 27, 29, 31) for estimating the force (F) comprise a steering wheel (2) deflection angle sensor (29).

**5.** Electric power steering system according to claim 1, **characterised in that** the means (13, 25, 27, 29, 31) for estimating the force (F) comprise a vehicle transverse acceleration sensor (27).

**6.** Electric power steering system according to claims 2 to 5 taken in combination, **characterised in that** the estimation means (13, 25, 27, 29, 31) comprise a calculation unit (31) which calculates the force value (F) from the values $\frac{d\psi}{d_t}$, $V_x$, $\alpha_v$, $\gamma_t$ measured by the yaw speed sensor (25), the advance speed sensor (13), the deflection angle sensor (29) and the transverse acceleration sensor (27) respectively.

**7.** Electric power steering system according to claim 6, **characterised in that** the calculation unit (31) calculates the force value (F) according to an equation of the type:

$$F = k_1 \cdot \frac{d\psi}{dt} + k_2 \cdot V_x + k_3 \cdot \alpha_v + k_4 \cdot \gamma_t$$

in which: $k_1$, $k_2$, $k_3$, $k_4$ are predetermined coefficients;
$\frac{d\psi}{d_t}$ is the measured yaw speed;
$V_x^t$ is the measured advance speed;
$\alpha_v$ is the measured deflection angle; and
$\gamma_t$ is the measured transverse acceleration.

**8.** Electric power steering system according to any one of claims 1 to 7, **characterised in that** the assistance device (12) comprises means (21) for measuring the force exerted by the assistance unit (20) on the rack (8), and the control device (16) is adapted to modify the torque control signal (S) as a function of the force value ($\underline{m}$) measured by said measuring means (21).

**9.** Electric power steering system according to claim 8, **characterised in that** the control device (16) comprises a calculator (122) which calculates a torque setpoint signal (S1) from pre-stored data and from operating parameters (P1, P2, P3), and a control module (123) which calculates the torque control signal (S) as a function of the setpoint signal (S1) and of the measured force value ($\underline{m}$), one of said operating parameters (P2) consisting of the estimated value (F) of the force exerted by the steering mechanisms (10) on the rack (8).

10. Electric power steering system according to claim 9, **characterised in that** the control module (123) comprises a conversion unit (124) which issues, on the basis of the measured value ($\underline{m}$) of force exerted by the assistance unit (20) on the rack (8), a measurement signal (S0) which is an image of the actual value of the output torque (Cs) of the motor (15).

11. Electric power steering system according to claim 10, **characterised in that** the control module (123) comprises a comparator unit (125) which receives the torque measuring signal (S0) and the torque setpoint signal (S1) at the input and issues a torque deviation signal ($S_\Delta$) at the output.

12. Electric power steering system according to claim 11, **characterised in that** the control module (123) comprises a. PID controller (126) which calculates the torque control signal (S) from the torque deviation signal ($S_\Delta$).

13. Electric power steering system according to claim 12, **characterised in that** the proportional gain ($K_p$) of the PID controller (126) is preset to a value between 6 and 9.

14. Electric power steering system according to claim 12, **characterised in that** the integral gain ($K_i$) of the PID controller (126) is preset to a value between 140 and 210.

15. Electric power steering system according to claim 12, **characterised in that** the differential gain ($K_d$) of the PID controller (126) is preset to a value between 0.016 and 0.024.

16. Electric power steering system according to claim 1, **characterised in that** the estimation means (221a, 221b) are means for measuring the forces exerted by at least one of the steering mechanisms (10) on the rack (8).

17. Electric power steering system according to claim 16, **characterised in that** the assistance device (112) comprises means (221c) for measuring the force exerted by the assistance unit (20) on the rack (8), and the control device (216) is adapted to modify the torque control signal (S') as a function of the force value ($\underline{m}$'c) measured by said measuring means (221c).

18. Electric power steering system according to claim 17, **characterised in that** the control device (216) comprises a calculator (222) which calculates a torque setpoint signal (S'1) from pre-stored data and from operating parameters (P'1, P'2, P'3), and a control module (223) which calculates the torque control signal (S') as a function of the setpoint signal (S'1) and the measured force value ($\underline{m}$'c), one of said operating parameters (P'2) consisting of the value ($\underline{m}$') of the forces exerted by at least one of the steering mechanisms (10) on the rack (8).

19. Electric power steering system according to claim 18, **characterised in that** the control module (223) comprises a conversion unit (224) which issues from the measured force value ($\underline{m}$'c) exerted by the assistance unit (20) on the rack (8), a measurement signal (S'0) which is an image of the actual value of the output torque (Cs) of the motor (15).

20. Electric power steering system according to claim 19, **characterised in that** the control module (223) comprises a comparator unit (225) which receives the torque measurement signal (S'0) and the torque setpoint signal (S'1) at the input, and issues a torque deviation signal ($S'_\Delta$) at the output.

21. Electric power steering system according to claim 20, **characterised in that** the.control module (223) comprises a PID controller (226) which calculates the torque control signal (S') from the torque deviation signal ($S'_\Delta$).

22. Electric power steering system according to claim 21, **characterised in that** the proportional gain ($K'_p$) of the PID controller (226) is preset to a value between 6 and 9,

23. Electric power steering system according to claim 21, **characterised in that** the integral gain ($K'i$) of the PID controller (226) is preset to a value between 140 and 210.

24. Electric power steering system according to claim 21, **characterised in that** the differential gain ($K'_d$) of the PID controller (226) is preset to a value between 0.016 and 0.024.

25. Method for controlling, by a torque control signal, an electric motor of an electric assistance device of a motor vehicle steering system, comprising a rotatable steering shaft (4) carrying at one end a steering wheel (2) and at its other end a transmission unit (7) cooperating with a rack (8) which is movable in translation and connected at each of its ends (11) to a mechanism (10) for steering the steered wheels of the vehicle, the assistance device (12; 212) comprising an electric motor (15) which drives an assistance unit (20) cooperating with the rack (8), and a control device (16; 216) providing said electric motor (15) with a control signal (S; S') adapted to vary the output torque (Cs) of the electric motor (15), **characterised in that** the torque control signal (S; S') is calculated as follows:

- the force exerted by the assistance unit (20) on the rack (8) is measured;
- the force value ($\underline{m}$; $\underline{m}$'c) thus obtained is converted into an actual torque value estimated from the characteristics of the reduction gear (19), the assistance unit (20) and the rack (8);
- the forces exerted by at least one of the steering mechanisms (10) on the rack (8) is estimated;
- the deviation of a setpoint torque value, determined from pre-stored data and operating parameters (P1, P2, P3; P'1, P'2, P'3), from the actual torque value thus estimated is calculated, one of said operating parameters (P2; P'2) consisting of the value of the estimated forces (F; $\underline{m}$') exerted by the steering mechanisms (10) on the rack (8);
- a torque control value is calculated by means of a PID control law of which the coefficients ($K_p$, $K_i$, $F_d$; $K'_p$, $K'_i$, $K'_d$) are predetermined;
- the torque control signal (S; S') which corresponds to said control value is calculated.

26. Control method according to claim 25, **characterised in that** the forces exerted by at least one of the steering mechanisms (10) on the rack (8) is estimated by calculation.

27. Control method according to claim 26, **characterised in that** the forces exerted by the steering mechanism (10) on the rack (8) are calculated by the following operations:

- the vehicle yaw speed $\frac{d\psi}{d_t}$ is measured;
- the vehicle advance speed $V_x$ is measured;
- the steering wheel deflection angle $\alpha_v$ is measured;
- the vehicle transverse acceleration $\gamma_t$ is measured; and
- the force value F is calculated according to an equation of the type:

$$F = k_1 . \frac{d\psi}{dt} + k_2 . V_x + k_3 . \alpha_v + k_4 . \gamma_t$$

where $k_1$, $k_2$, $k_3$, $k_4$ are predetermined coefficients.

28. Control method according to claim 25, **characterised in that** the forces exerted by at least one of the steering mechanisms (10) on the rack (8) are estimated by measuring said forces.

29. Motor vehicle comprising a power steering system according to any one of claims 1 to 24, or operating by a method according to any one of claims 25 to 28.

FIG.1

FIG.2

FIG.3

FIG.4